# EUROPÄISCHE PATENTSCHRIFT

(11) **EP 0 791 149 B1**
(45) Veröffentlichungstag und Bekanntmachung des Hinweises auf die Patenterteilung: **14.04.1999**
(21) Anmeldenummer: 95935963.9
(22) Anmeldetag: 25.10.1995
(51) Int. Cl.: F16H 61/18

(54) **GETRIEBESCHALTER MIT SCHALTSPERRE DURCH SCHIEBETASTE**
GEARSHIFT SWITCH WITH SLIDE-BUTTON SHIFTLOCK
INTERRUPTEUR POUR SYSTEME DE CHANGEMENT DE VITESSES MUNI D'UN SYSTEME DE BLOCAGE A TOUCHE COULISSANTE

(30) Priorität: 08.11.1994 DE 4439905
(43) Veröffentlichungstag der Anmeldung: 27.08.1997
(73) Patentinhaber: ITT Automotive Europe GmbH, 60488 Frankfurt am Main (DE)
(72) Erfinder: NEUBAUER, Walter, D-74348 Lauffen (DE)
(74) Vertreter: Dreiss, Fuhlendorf, Steimle & Becker
(86) Internationale Anmeldenummer: EP9504174
(87) Internationale Veröffentlichungsnummer: WO9614527

(56) Entgegenhaltungen:
- DE-A- 2 934 473
- DE-A- 4 017 136
- GB-A- 2 097 194

## Beschreibung

Die Erfindung betrifft einen elektrischen Schalter, insbesondere Schalter für das Getriebe eines Kraftfahrzeugs, mit den Merkmalen des Oberbegriffs von Anspruch 1, die als bekannt zu gelten haben.

Bei derartigen Schalt rn, insbesondere wenn sie am Lenkstock eines Kraftfahrzeugs befestigt sind und einen langen Schalthebel besitzen, besteht die Möglichkeit, daß der Fahrzeugführer unabsichtlich vor dem Starten des Fahrzeugs den Schalthebel in einen außerhalb des Leerlauf liegenden Gang schaltet und danach das Kraftfahrzeug startet. Damit kann sich das Fahrzeug durch den Startvorgang versehentlich in Bewegung setzen. Um diese bei unsachgemäßer Behandlung des Fahrzeugs bestehende Möglichkeit herabzusetzen, ist von Kraftfahrzeugherstellern vorgeschlagen worden, für den in einer Normalstellung oder Nullstellung sich befindenden Schalthebel eine Arretierungsmöglichkeit vorzusehen. Die fachmännische Bedienungsperson kann daher, nachdem der Motor stillgesetzt und der in der Nullstellung angeordnete Leerlauf eingeschaltet ist, in dieser Leerlaufstellung eine Arretierung einlegen. Es ist somit nicht möglich, ohne Lösung dieser Arretierung einen anderen Getriebegang einzuschalten. Dadurch läßt sich auch sicher verhindern, daß das Fahrzeug versehentlich in Bewegung gesetzt werden kann, ohne vorher die genannte Arretierung zu lösen.

Die dem Anmeldungsgegenstand ähnliche DE-A 40 17 136 zeigt einen mechanischen Schalter für ein Getriebe eines Kraftfahrzeuges mit einem Gehäuse 12 mit einem Schaltstück 13 und einem Schalthebel 10, der mit dem Schaltstück eine bezüglich des Gehäuses feste Achse zwischen mehreren Positionen horizontal verschwenkbar ist, wobei für mindestens eine Position des Schalthebels 10, vorzugsweise für eine zwischen zwei Arbeitsstellungen befindliche Neutralstellung 0, eine Schaltsperre 21, 24, 25, 26 vorgesehen ist. An dem Gehäuse 12 sind zwei voneinander unabhängig verschiebbare Schwenkhebel 22, 23 vorgesehen. Die Arretierung wird nur dadurch erreicht, daß die beiden vorgespannten Schwenkhebel durch die Kraft einer Feder ständig in der Sperrstellung gehalten werden. Somit ist der Schalthebel 10 aus der gesperrten Stellung erst durch eine gesonderte Manipulation herausbewegbar.

Die Erfindung geht daher aus von einem Schalter der sich aus dem Oberbegriff des Anspruchs 1 ergebenden Gattung. Aufgabe der Erfindung ist es, die Arretierung für einen derartigen Schalter besonders preiswert und raumsparend anzuordnen. Die Erfindung wird durch die sich aus dem kennzeichnenden Teil ergebende Merkmalskombination gelöst.

Die Erfindung besteht im Prinzip also darin, die Arretierung mittels einer einzelnen Schiebetaste am Schaltergehäuse vorzunehmen, wobei in einfacher Weise mittels der Taste das Schaltstück in seiner neutralen oder Nullage festgehalten wird.

Um das Schaltstück in einfacher Weise in beiden Bewegungsrichtungen zu sichern, empfiehlt sich in Weiterbildung der Erfindung die Merkmalskombination nach Anspruch 2. Danach ist eine das Schaltstück von 2 Seiten umfassende Klaue vorgesehen, die dessen Bewegung in den beiden Schwenkrichtungen hindert.

Um nachträglich eine Arretierung in einem gebräuchlichen Lenkstockschalter anbringen zu können, wird in Weiterbildung der Erfindung die Merkmalskombination nach Anspruch 3 vorgeschlagen. Danach wird oberhalb einer Öffnung eines Gehäuses eine Halteplatte befestigt, durch welche, angetrieben durch die Taste, die Klauen in das Schalterinnere und damit an dem Schaltstück in Sperrlage der Taste angreifen.

Um einen nachträglichen Einbau der Arretierung noch zu erleichtern, kann gemäß Anspruch 4 eine die Finger der Klaue tragende Fingerplatte in der Gehäuseplatte längsverschieblich geführt sein. Ein Zusammenfügen der Teile läßt sich dadurch erreichen, daß diese lösbar miteinander verrastet sind.

Um eine gute Führung der Fingerplatte innerhalb der Halteplatte zu erreichen, werden die Merkmale nach Anspruch 5 vorgeschlagen. Dabei kann gemäß den Merkmalen nach Anspruch 6 die Führung gleichzeitig für einen elastischen Toleranzausgleich zwischen der Fingerplatte und der Halteplatte sorgen.
Hierzu besitzt die Fingerplatte zwei elastische Federarme, die sich an den Führungskanten der Halteplatte abstützen und somit für einen Toleranzausgleich sorgen. Zusätzlich können die Federarme gleichzeitig noch gemäß Anspruch 7 als Rastmittel dienen, um Raststellungen der Federplatte gegenüber der Halteplatte vorzugeben, durch die beispielsweise die entriegelte Stellung und die verriegelte Stellung des Schaltstücks festgelegt sein kann.

Ein zweckmäßiger Aufbau der Federarme läßt sich den Merkmalen nach Anspruch 8 entnehmen.

Eine besonders einfache Verrastung zum Erzielen von Raststellungen ergeben die Merkmale nach Anspruch 9. Die Erfindung ist besonders geeignet für Lenkstockschalter der sich aus Anspruch 10 ergebenden Ausgestaltung. Danach wird über das Schaltstück nur die neutrale Lage sowie das Fahren in Vorwärtsrichtung bzw. Rückwärtsrichtung festgelegt. Die einzelnen Geschwindigkeiten lassen sich dann mit Hilfe des Drehschalters einschalten. Da somit in Ausschaltstellung des Motors über den Drehschalter immer ein Gang eingeschaltet sein kann, ist die vorliegende Erfindung besonders wichtig, da nur so verhindert werden kann, daß durch eine zufällige oder absichtliche Fehlbedienung der Motor mit eingeschaltetem Gang gestartet werden kann.

Ein Ausführungsbeispiel dieser Erfindung wird nachfolgend anhand der Zeichnung erläutert. Darin zeigt:
- Fig. 1: in von der Seite gesehener Ansicht einen Lenkstock schalter mit auf die Gehäuseblende aufgesetzter Ta ste,
- Fig. 2: von oben gesehen den Lenkstockschalter nach Figur 1, bei dem von unten gesehen, die Rastenanordnung auf die Gehäuseblende aufgesetzt ist,
- Fig. 3: eine Draufsicht auf das innerhalb des Schalters be findliche Schaltergehäuse, wobei die Sichtrichtung die gleiche wie in Figur 2 ist,
- Fig. 4: in stark vergrößerter Darstellung, von unten gese hen, die Halteplatte nach Figur 2,
- Fig. 5: einen Schnitt durch die Halteplatte nach Figur 4, in der Sicht in Figur 4 von links nach rechts,
- Fig. 6: eine Schiebetaste nach Figur 1 und 2, von unten ge sehen in nochmals stark vergrößerter Darstellung,
- Fig. 7: die Schiebetaste nach Figur 6, entlang der Linie KK in Figur 6,
- Fig. 8: eine mit der Schiebetaste nach Figur 5 und 6 ver rastbare Fingerplatte,
- Fig. 9: einen längs der Linie L geführten Schnitt durch die Fingerplatte nach Figur 8,
- Fig. 10: die Fingerplatte nach den Figuren 8 und 9 und
- Fig. 11: ausschnittsweise mit Rastarm die Schiebetaste nach den Fig. 6 und 7.

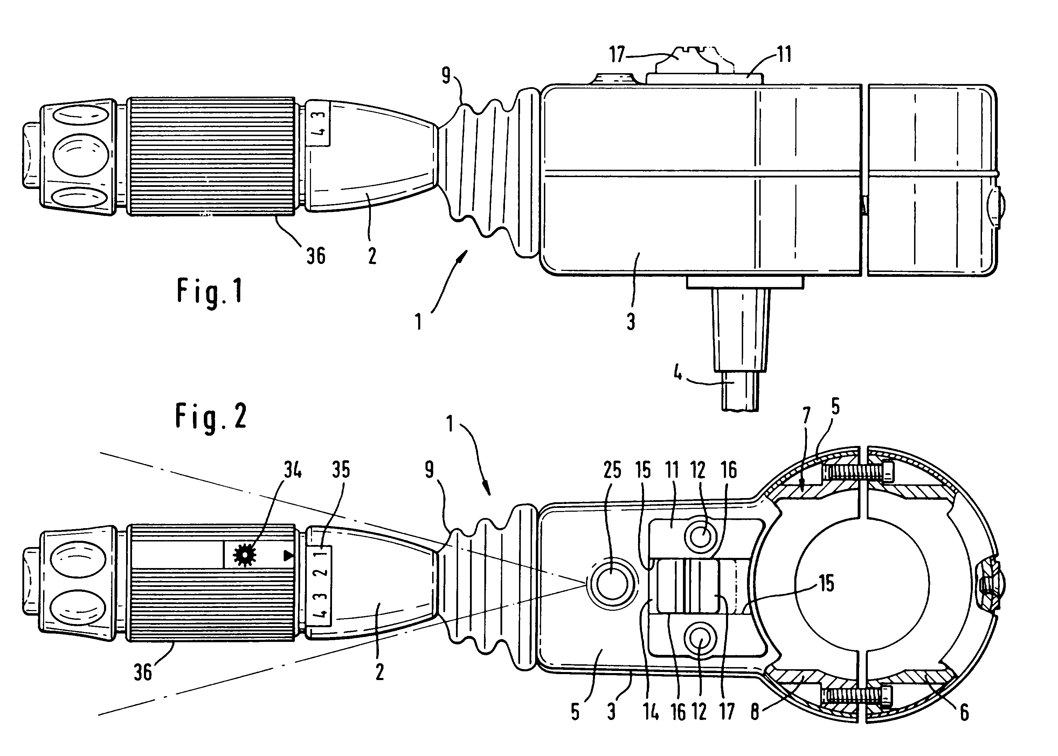

Fig. 1 zeigt einen Lenkstockschalter 1, der im wesentlichen aus einem Schalthebel 2 und einer Schalteranordnung 3 besteht. Wie aus Fig. 2 ersichtlich, ragt der Schalthebel 2 in die Schalteranordnung 3, von der eine elektrische Leitung 4 herausgeführt ist, die abgebrochen dargestellt wurde. Die Schalteranordnung ist abgedeckt durch eine Kunststoffblende 5, die geteilt ausgeführt sein kann. Das innerhalb der Kunststoffblende angeordnete Schaltergehäuse 7 setzt sich aus mehreren Teilen zusammen. So bilden die Gehäuseteile 6 und 8 eine Halterung, mit der der Lenkstockschalter 1 an dem nicht dargestellten Lenkstock eines Kraftfahrzeugs befestigt werden kann.

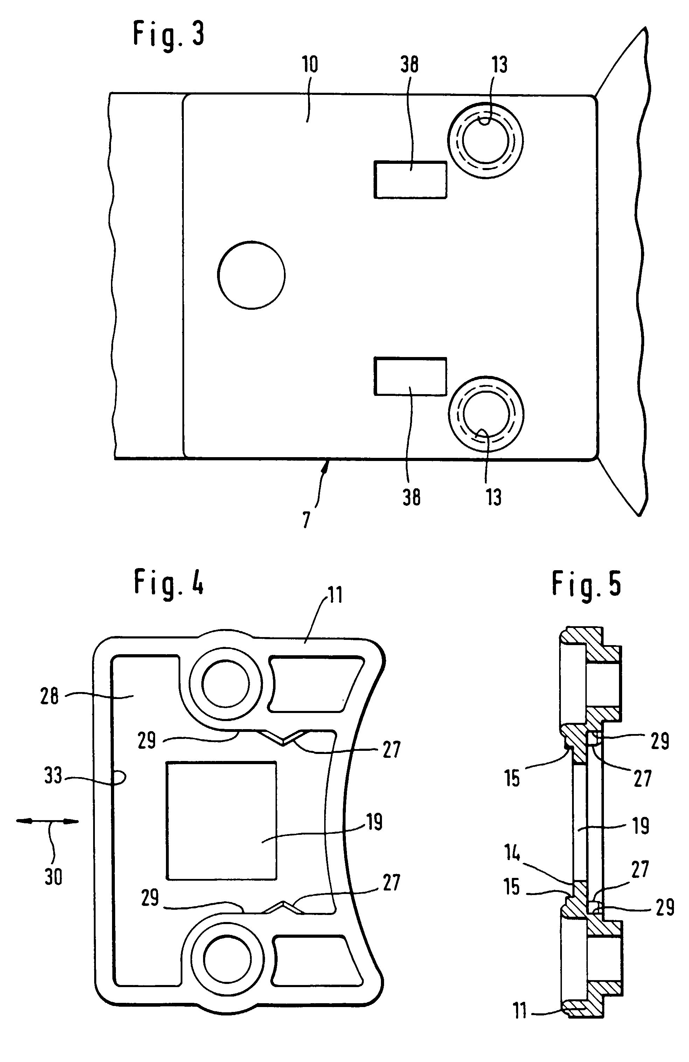

Die Verbindung zwischen dem Schalthebel 2 und der Schalteranordnung 3 ist mittels einer Manschette 9 abgedichtet. Unterhalb der Kunststoffblende 5 liegt in Fig. 2 nicht erkennbar der Deckel des Schaltergehäuses, der in Fig. 3 in der gleichen Blickrichtung wie in Fig. 2 gesehen, dargestellt ist.

Der Gehäusedeckel 10 ist in an sich bekannter Weise mit dem Gehäuseteil 8 verbunden, so daß der Gehäusedeckel 10 und das Gehäuseteil 8 eine einstückige Einheit bilden. Eine auf die Kunststoffblende 5 aufgesetzte Halteplatte 11 ist mittels Schrauben 12 mit dem Gehäusedeckel 10 verschraubt, wobei die Schrauben 12 in Gewinde 13 eingreifen.

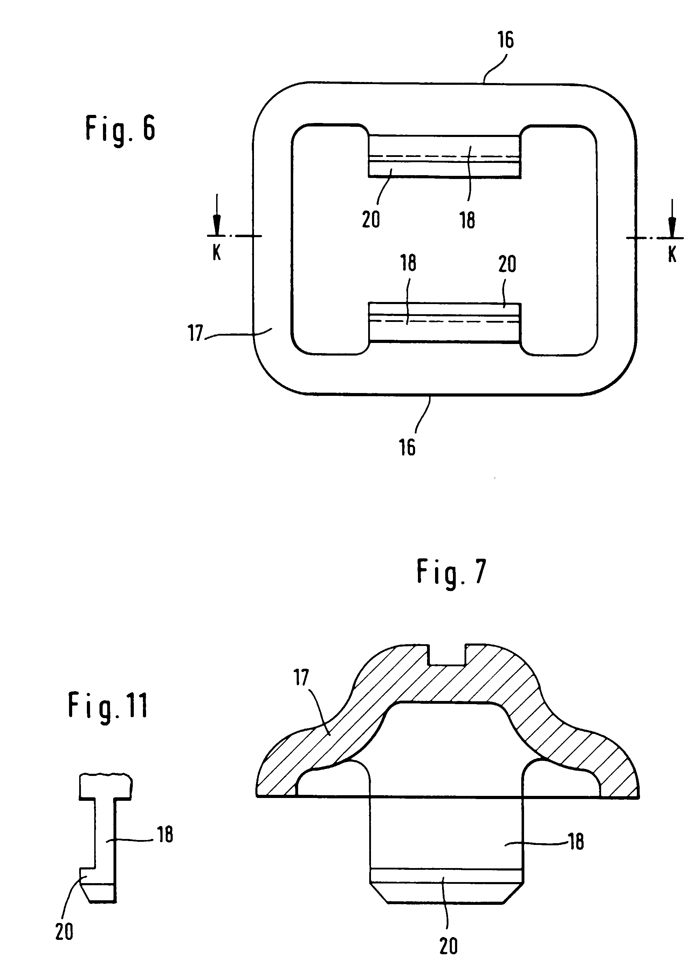

Auf diese Weise greifen die Halteplatte 11 und der Gehäusedeckel 10 von oben und von unten an der Kunststoffblende 5 an und bilden mit dieser eine bauliche Einheit. Die Halteplatte 11 ist in Fig. 4, von dem Schalterinneren her nach oben gesehen, gezeigt, so daß die in Fig. 4 sichtbare Seite der Halteplatte der Oberfläche des Gehäusedeckels nach Fig. 3 zugewandt ist. Wie aus Fig. 5 ersichtlich, besitzt die Halteplatte 11 auf ihrer dem Betrachter in Fig. 2 zugewandten Obefläche eine Nut 14, an deren Seitenwänden 15 die Seitenflächen 16 einer in Fig. 6 vergrößert dargestellten Schiebetaste 17 geführt werden. Die Schiebetaste 17 gleitet somit mit ihren Seitenflächen 16 an den Seitenwänden 15 der Nut 14.

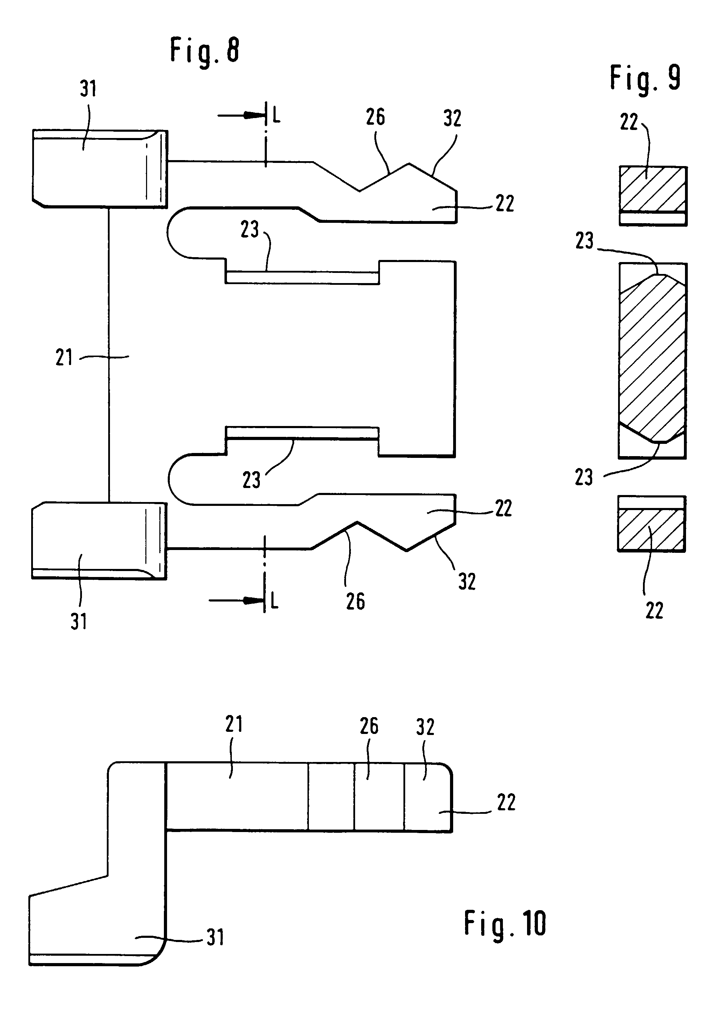

Wie aus Fig. 6 und 7 ersichtlich, besitzt die Schiebetaste 17 zwei Federbeine 18, die durch eine unterhalb der Schiebe-taste liegende Rechtecköffnung 19 (siehe Fig. 4) durch die Halteplatte 11 ragen. Die Federbeine 18 sind mittels Rastansätzen 20 (siehe Fig. 6, 7 und 11) mit einer Fingerplatte 21 (siehe Fig. 8 und 10) verrastet, indem sie hinter die Seitenflächen 23 der als Rastplatte ausgebildeten Fingerplatte 21 haken und so mit dieser eine lösbare Einheit bilden, welche gegenüber der Halteplatte 11 verschiebbar ist. Die Fingerplatte 21 hat somit auch die Aufgabe als Wiederlager unterhalb der Halteplatte dafür zu sorgen, daß die Schiebetaste 17 nicht aus der Rechtecköffnung 19 der Halteplatte 11 fallen kann.

Die Federbeine 22 der Fingerplatte 21 besitzen Rücksprünge 26, welche Vorsprüngen 27 einer Ausnehmung 28 in der Halteplatte 11 entsprechen. Somit stützen sich die Federarme 22 unter Vorspannung an den Seitenwänden 29 der Ausnehmung 28 ab, wobei die äußeren Kanten der Federarme 22 an den Seitenflächen 29 der Halteplatte 11 entlanggleiten. Die Fingerplatte 21 in Verbindung mit der mit ihr verrasteten Schiebe-taste 17 kann also in Richtung des Pfeiles 30 längs der Halteplatte 11 in beiden Richtungen verschoben werden. Sobald die federnd an den Federarmen 22 angeordneten Rücksprünge 26 gegenüber den Vorsprüngen 27 zu liegen kommen und die Rücksprünge 27 somit in die gehäusefesten Vorsprünge einrasten, ist eine Rastlage der Schiebe-taste 17 und damit der Fingerplatte 21 gegenüber dem Gehäuse 7 festgelegt. In dieser Stellung ist es bei der hier beschriebenen Ausführungsform so, daß das schwenkbar in einer Achse 25 innerhalb des Gehäuses gelagerte, in der Zeichnung nicht dargestellte Schaltstück durch eine entsprechende Bewegung des Schalthebels 2 ausgeschwenkt werden kann. In dieser Lage ist somit eine Auslenkung des Schaltstücks aus einer neutralen Stellung in einer Vorwärtsrichtung bzw. Rückwärtsrichtung des Getriebes möglich. Bewegt man die Schiebetaste 17 in entgegengesetzter Richtung von dem Lenkstock des Kraftfahrzeugs weg hin zu dem Schalthebel 2, also von der in Fig. 1 gestrichelt gezeichneten in die fett gezeichnete Stellung, so nimmt die Fingerplatte und damit die Klauenfinger eine Lage ein, in der sie das Schaltstück in der neutralen Lage festhalten, sobald es diese Lage erreicht, falls das Schaltstück die neutrale Lage nicht schon vorher eingenommen hatte.

Auch dieser Verriegelungsstellung ist eine Raststellung der Fingerplatte gegenüber der Halteplatte zugeordnet, indem die Vorderschrägen 32 der Federarme 22 an entsprechenden Schrägen der Vorsprünge 27 angreifen und damit für eine Vorspannung der Fingerplatte in Richtung der Wand 33 der Halteplatte 11 sorgen, so daß die Fingerplatte so lange federnd in dieser Stellung gehalten wird, bis sie entgegen der Kraft der auszulenkenden Federarme durch Verschieben der Schiebetaste 17 in die zuvor beschriebene Raststelllung gebracht wird.

Der über die Achse 25 schwenkbar in dem Schaltergehäuse 7 gelagerte Schalthebel 2 besitzt weiterhin an seinem Endbereich eine um die Längsachse des Schalthebels drehbar gelagerte Hülse, die gleichzeitig als Handhabe für einen Drehschalter dient. Mit Hilfe dieses Drehschalters können dann die Getriebegänge des Getriebeschalters eingeschaltet werden, wie durch die Symbole 34, 35, angedeutet, die mit der drehbaren Hülse 36 bzw. gegenüber dem Schalthebel 2 fixiert angeordnet sind.

## Patentansprüche

1. Elektrischer Schalter, insbesondere Wendeschalter für ein Getriebe eines Kraftfahrzeuges, mit einem Gehäuse (7) und einem darin vorgesehenen elektrischen Schaltstück, das mit einem Schalthebel (2) derart gekoppelt ist, daß der Schalthebel (2) zusammen mit dem Schaltstück um eine bezüglich des Gehäuses feste Achse (25) zwischen mehreren Positionen verschwenkbar ist, wobei für mindestens eine Neutralstellung des Schalthebels (2), die vorzugsweise zwischen zwei Arbeitsstellungen befindlich ist, eine Schaltsperre mit Verriegelungsstellung vorgesehen ist, aus der der Schalthebel (2) erst durch eine gesonderte Manipulation herausbewegbar ist, dadurch **gekennzeichnet**, daß die Schaltsperre eine an dem Gehäuse (7) in die Verriegelungsstellung verschiebbar gelagerte Taste (17) umfaßt, die mit einem Verriegelungsansatz (31) verbunden ist, der in der Verriegelungsstellung der Taste das elektrische Schaltstück in der Neutralstellung hält.

2. Schalter nach Anspruch 1, dadurch **gekennzeichnet**, daß der Verriegelungsansatz (31) mit mindestens einem, vorzugsweise zwei Klauenfingern (31) versehen ist, der in der Verriegelungsstellung der Taste (17) an den Seitenwänden des Schaltstücks angreift und dieses festhält.

3. Schalter nach Anspruch 1 oder 2, dadurch **gekennzeichnet,** daß die Taste (17) auf einer an dem Gehäuse (7) lösbar befestigten Halteplatte (11) angeordnet ist, wobei die zwei Klauenfinger (31) durch Öffnungen (38) im Gehäuse (7) in dieses eingreifen.

4. Schalter nach Anspruch 3, dadurch **gekennzeichnet**, daß die Klauenfinger (31) zumindest teilweise von einer von der Halteplatte (11) geführten Fingerplatte (21) abstehen und die Taste (17) durch die Halteplatte (11) greifend mit der Fingerplatte (21) lösbar verrastet ist.

5. Schalter nach einem der vorangegangenen Ansprüche, dadurch **gekennzeichnet**, daß die Fingerplatte (21) an Seitenwänden (29) einer Ausnehmung (28) in der Halteplatte (11) geführt ist.

6. Schalter nach Anspruch 5, dadurch **gekennzeichnet**, daß die Führung der Fingerplatte (21) in der Halteplatte (11) über mindestens einen an der Fingerplatte (21) vorgesehenen seitlichen Federarm (22) geschieht, der sich elastisch an den Seitenwänden (29) der Halteplatte (11) abstützt.

7. Schalter nach Anspruch 6, dadurch **gekennzeichnet**, daß der Federarm (22) mit ersten Rastmitteln (26) versehen ist, die mit zugeordneten zweiten Rastmitteln (27) an den Seitenwänden (29) zusammenwirkt und so zumindest eine Raststellung der Taste (17) festlegen.

8. Schalter nach einem der Ansprüche 6 oder 7, dadurch **gekennzeichnet**, daß an der Fingerplatte (21) zwei sich im wesentlichen in Bewegungsrichtung (30) der Taste (17) erstreckende, zueinander symetrische Federarme (22) vorgesehen sind.

9. Schalter nach einem der Ansprüche 7 oder 8, dadurch **gekennzeichnet**, daß die ersten Rastmittel an den Seitenflächen der Federarme (21) vorgesehene Rücksprünge (26) sind, die mit entsprechenden Vorsprüngen (27) an den zugeordneten Seitenwänden (29) der Ausnehmung (28) zusammenwirken, welche die zweiten Rastmittel bilden.

10. Schalter nach einem der vorangegangenen Ansprüche, dadurch **gekennzeichnet**, daß an dem Schalthebel (2) eine um dessen Längsachse drehbare Hülse (36) angeordnet ist, die als Betätigungsgriff zur Betätigung eines am Schalthebel (2) angeordneten Drehschalters wirksam ist.

11. Schalter nach einem der vorangegangenen Ansprüche, dadurch **gekennzeichnet**, daß an den beiden Federarmen (22) dritte Rastmittel (32) vorgesehen sind, welche in Verbindung mit den zweiten Rastmitteln (27) der Halteplatte (11) eine zweite Raststellung der Taste (17) vorgeben.

## Claims

1. Electrical shifter (1), in particular a reversing switch for a transmission of a motor vehicle, with a housing (7) and an electrical shifting element arranged in the housing, the shifting element is coupled with a shifting lever (2) such, that the shifting lever (2) can pivot with the shifting element about a fixed axis (25) with regard to the housing (7) between several positions, whereby for at least one neutral position of the shifting lever (2), th neutral position preferably located between two working positions, a shift lock with lock position is provided, from which the shift lever (2) can be moved only by means of a special manipulation, characterized in that the shift lock is provided with a button (17) mounted on the housing (7) and slidable into the lock position, said button is connected with a locking lug (31) which holds the electrical shifting element in the neutral position when the button (17) is in the locked position.

2. Shifter according to Claim 1, characterized in that the locking lug (31) is provided with at least one, preferably two pawl fingers (31) which engage in the locking position of the button (17) in the side walls of the shifting element and hold it securely.

3. Shifter according to Claim 1 or 2, characterized in that the button (17) is located on a retaining plate (11) detachably mounted to the housing (7), with the two pawl fingers (31) engaging into it through openings (38) in the housing (7).

4. Shifter according to Claim 3, characterized in that the pawl fingers (31) project at least partially from a finger plate (21) guided by the retaining plate (11), and the button (17) extends through the retaining plate (11) and snaps into the finger plate (21) detachably.

5. Shifter according to one of the preceding claims, characterized in that the finger plate (21) is guided on side walls (29) of a recess (28) in the retaining plate (11).

6. Shifter according to Claim 5, characterized in that the guidance of the finger plate (21) in the retaining plate (11) is done by at least one lateral spring arm (22) arranged on the finger plate (21), which is braced elastically against the side walls (29) of the retaining plate (11).

7. Shifter according to Claim 6, characterized in that the spring arm (22) is provided with first engagement means (26) which cooperates with associated, second engagement means (27) on the side walls (29) and thus define at least one engaged position of the button (17).

8. Shifter according to one of Claims 6 or 7, characterized in that two spring arms (22) are provided on the finger plate (21) which extend essentially in the direction of movement (30) of the button (17) and which are symmetrical to one another.

9. Shifter according to one of Claims 7 or 8, characterized in that the first engagement means are backward protrusions (26) located on the side surfaces of the spring arms (21), said backward protrusions cooperating with corresponding protrusions (27) on the associated side walls (29) of the recess (28), which form the second engagement means.

10. Shifter according to one of the preceding claims, characterized in that a casing (36) rotating about its longitudinal axis is provided on the shifting lever (2), said casing acting as an actuating grip for actuating a rotary switch located on the shift lever (2).

11. Shifter according to one of the preceding claims, characterized in that on the two spring arms (22), third engagement means (32) are provided which define a second engaged position of the button (17) in connection with the second engagement means (27) of the retaining plate (11).

## Revendications

1. Commutateur électrique, notamment commutateur d'inversion de sens de marche pour boîte de vitesses d'un véhicule automobile, comprenant un boîtier (7) et, prévue dans celui-ci, une pièce de commutation électrique qui est accouplée à un levier de commutation (2) de façon qu'il soit possible de faire basculer le levier de commutation (2) en commun avec la pièce de commutation entre plusieurs positions autour d'un axe (25) fixe par rapport au boîtier, tandis qu'il est prévu, pour au moins une position neutre du levier de commutation (2) qui est de préférence située entre deux positions de travail, un verrou de commutation présentant une position de verrouillage à partir de laquelle le levier de commutation (2) ne peut être déplacé que moyennant une manipulation spéciale, caractérisé en ce que le verrou de commutation comprend un bouton (17) qui est monté sur le boîtier (7) de façon à pouvoir être déplacé dans la position de verrouillage et qui est relié à une pièce en saillie de verrouillage (31) qui, dans la position de verrouillage du bouton, maintient la pièce de commutation électrique dans la position neutre.

2. Commutateur suivant la revendication 1, caractérisé en ce que la pièce en saillie de verrouillage (31) est pourvue d'au moins un, de préférence de deux doigts de griffe (31) qui, dans la position de verrouillage du bouton (17), agissent sur les parois latérales de la pièce de commutation et immobilisent celle-ci.

3. Commutateur suivant la revendication 1 ou 2, caractérisé en ce que le bouton (17) est disposé sur une plaque de maintien (11) fixée d'une manière séparable sur le boîtier (7), les deux doigts de griffe (31) s'engageant dans le boîtier (7) à travers des ouvertures (38) ménagées dans celui-ci.

4. Commutateur suivant la revendication 3, caractérisé en ce que les doigts de griffe (31) font saillie au moins partiellement sur une plaque à doigts (21) guidée par la plaque de maintien (11) et le bouton (17) est enclenché d'une manière séparable sur la plaque à doigts (21) en traversant la plaque de maintien 11.

5. Commutateur suivant l'une des revendications précédentes, caractérisé en ce que la plaque à doigts (21) est guidé sur des parois latérales (29) d'un évidement (28) ménagé dans la plaque de maintien (11).

6. Commutateur suivant la revendication 5, caractérisé en ce que le guidage de la plaque à doigts (21) dans la plaque de maintien (11) a lieu au moyen d'au moins un bras latéral élastique (22) qui est prévu sur la plaque à doigts (21) et prend appui élastiquement sur les parois latérales (29) de la plaque de maintien (11).

7. Commutateur suivant la revendication 6, caractérisé en ce que le bras élastique (22) est pourvu de premiers moyens d'enclenchement (26) qui coopèrent avec des deuxièmes moyens d'enclenchement (27) associés situés sur les parois latérales (29) et déterminent ainsi au moins une position d'enclenchement du bouton (17).

8. Commutateur suivant l'une des revendications 6 ou 7, caractérisé en ce que, sur la plaque à doigts (21), il est prévu deux bras élastiques (22) symétriques l'un par rapport à l'autre et orientés essentiellement suivant la direction de déplacement (30) du bouton (17).

9. Commutateur suivant l'une des revendications 7 ou 8, caractérisé en ce que les premiers moyens d'enclenchement sont des parties en retrait (26) qui sont prévues sur les surfaces latérales des bras élastiques (21) et qui coopèrent avec des parties en saillie (27) correspondantes situées sur les parois latérales associées (29) de l'évidement (28) et constituant les deuxièmes moyens d'enclenchement.

10. Commutateur suivant l'une des revendications précédentes, caractérisé en ce qu'un manchon (36) pouvant tourner autour de son axe longitudinal est disposé sur le levier de commutation (2), ce manchon jouant le rôle de prise d'actionnement pour actionner un commutateur rotatif disposé sur le levier de commutation (2).

11. Commutateur suivant l'une des revendications précédentes, caractérisé en ce que, sur les deux bras élastiques (22), il est prévu des troisièmes moyens d'enclenchement (32) qui, en liaison avec les deuxièmes moyens d'enclenchement (27) de la plaque de maintien (11), fournissent une seconde position d'enclenchement du bouton (17).
